# EUROPEAN PATENT SPECIFICATION

(11) **EP 2 696 121 B1**
(45) Date of publication and mention of the grant of the patent: **16.08.2017**
(21) Application number: 13173093.9
(22) Date of filing: 20.06.2013
(51) Int. Cl.: F16K 35/06, F16K 5/06

(54) **Shutoff valve with anti freeze system**
Absperrventil mit Einfrierschutzsystem
Soupape d'arrêt avec système antigel

(30) Priority: 08.08.2012 ES 201230872 U
(43) Date of publication of application: 12.02.2014
(73) Proprietor: Genebre Group, S.L., 08909 Barcelona (ES)
(72) Inventor: Paris Terre, Miquel, 08908 Hospitalet de Llobregat (ES)
(74) Representative: Oficina Ponti, SLP

(56) References cited:
- WO-A1-2005/036036
- WO-A1-2012/099545
- US-A- 3 429 553
- US-A- 3 883 113
- US-A- 3 960 168

## Description

### Object of the Invention.

The invention refers to a valve designed to work in extreme temperatures, where there is a risk that the change in volume of the liquid circulating therein, resulting from the change in state from solid to liquid, causes breakage of the body of the valve and the uncontrolled release of the liquid.

### State of the Art.

There are various types of state of the art shutoff valves on the market, specifically designed not only to regulate the flow of the liquid passing through them, but also to prevent the risk of temperature changes around 0° centigrade, or similar, where there is a change of state and the liquid, in the case of water, can become solid with the corresponding volume increase, which is forestalled, as it is a known and therefore conventional solution, by providing a small hole in the sphere of the valve, associated with the lever thereof , in such a way that when this change of state occurs, the liquid can escape to the outside without altering the closed status of the valve and preventing the consequences of this volume increase.

Japanese patent no. JP 19950304166 shows a valve whose sphere (24) has a hole (36) for the outflow of the water contained therein (24).

Another example of the above technique is Japanese patent no. 19982002796U, equipped with a regulation sphere (3) with a hole for the outflow of water.

Other valves of this type are known from the documents WO 2012099545, WO 2005036036 and US 3883113.

### Purpose of the Invention.

To prevent changes of state from liquid to solid, without detriment to the perfect interruption of the change from liquid to solid, and without need to allow a small flow to prevent the volume increase involved in this change of state, to prevent breakage of the body of the valve.

Another purpose of the invention is an arrangement in the design thereof that allows immobilization of the valve lever and therefore its possible handling by unscrupulous persons attempting to make use of the flow through the valve in open position for their own purposes.

### Description of the Invention.

Shutoff valves are conventionally equipped with a body with a seating made of Teflon or a similar material which houses a sphere, provided with liquid inlet and outlet holes, which rotates on the valve seating, the sphere including a hole for immobilizing a shaft whose upper end includes the corresponding valve operating lever, which, when operated, moves through an angle of 90° and forces the sphere to rotate in relation to the seating in which it is housed, allowing the liquid to enter and leave, such that when the holes in the sphere coincide with the liquid inlet and outlet holes, the liquid flows out, whereas when the surface of the sphere coincides with the liquid inlet and outlet holes, the passage of liquid is completely blocked.

Between the closed and open positions, the flow of liquid increases or decreases depending on the rotation of the lever and therefore the sphere. However, in frost conditions, the small amount of water remaining inside the valve freezes and dilates causing breakage of the body of the valve and the undesired escape of the liquid with the resulting damages.

This type of damage is prevented by current state of the art techniques, by leaving a small hole in the body of the sphere to allow for the expansion of any liquid remaining inside or between the sphere and the seating in case of frost, but which obviously causes a small loss of liquid when there is no frost. The solution to this problem adopted by this invention is a change in the configuration of the sphere whereby the exterior surfaces of the latter are machined totally asymmetrically, such that in the closed position, the sphere blocks the inflow and outflow of liquid, and by rotating the lever slightly, the surface of the sphere facing the inlet blocks the passage of the liquid, whereas the surface of the sphere facing the outlet pipe partially overlaps the seating and allows the passage of the liquid inside the sphere or around its outer surface.

Other details and characteristics shall be shown throughout the description below referring to drawings attached to this report which are shown for illustrative but not limiting purposes only in a drawing of the invention.

### Description of the drawings.

Below is a list of the different parts of the invention, which are indicated in the attached drawings with their respective numbers; (10) valve, (11) body of the valve, (12) water inlet, (13) outlet, (14) fitting, (15) shaft, (16) cap, (17) mantle, (18) hole, (19) hole, (20) neck, (21) sphere, (22) outer surface of the sphere (21), (23) hole, (24) outlet, (25) pin, (26) shaft, (27) tab, (28) o-rings, (29) seating, (30) inlet, (31) hole, (32) hole, (33) extensions, (34) recesses, (35) upper shaft (17), (36-37) contact zones, (38) channel, (39) hole, (40) seal, (41) pin head (25).
Figure 1 is a longitudinal elevation section of the body (11) of the valve (10), showing the main parts thereof, such as the cap (16), the shaft (15) and the sphere (21).
Figure 2 is a front elevation view of the pin (25) which is inserted in the holes (18-19) provided in the lever (17) and in the tab (27) of the body (11) of the valve (10),
Figure 3 is a top plan view of the sphere (21), being a design unique to the invention, in which the inflow of liquid (30) to the sphere (21) is less than the outflow of liquids (24).
Figure 4 is a cross section cut B-B, according to Figure 3.
Figure 5 is cross-section elevation view of the sphere (10) showing how the inlet section (23) is smaller than the outlet section (24), and the holes (31-32) for fitting the shaft (15).
Figure 6 is a perspective of the sphere (21) with a tapered hole (23) connecting the inlet (30) to the sphere (22), and the outlet (24) thereof.
Figure 7 is a front elevation view of the valve (10) shaft (15) on one of its surfaces, with a longitudinal hole (39) for the passage of air through the channel (38).
Figure 8 is a front elevation view of the valve (10) shaft (15) on another of the surfaces.
Figure 9 is a perspective of the shaft (15), which has a longitudinal hole (39) for the passage of air through the channel (38).

### Description of an embodiment of the invention.

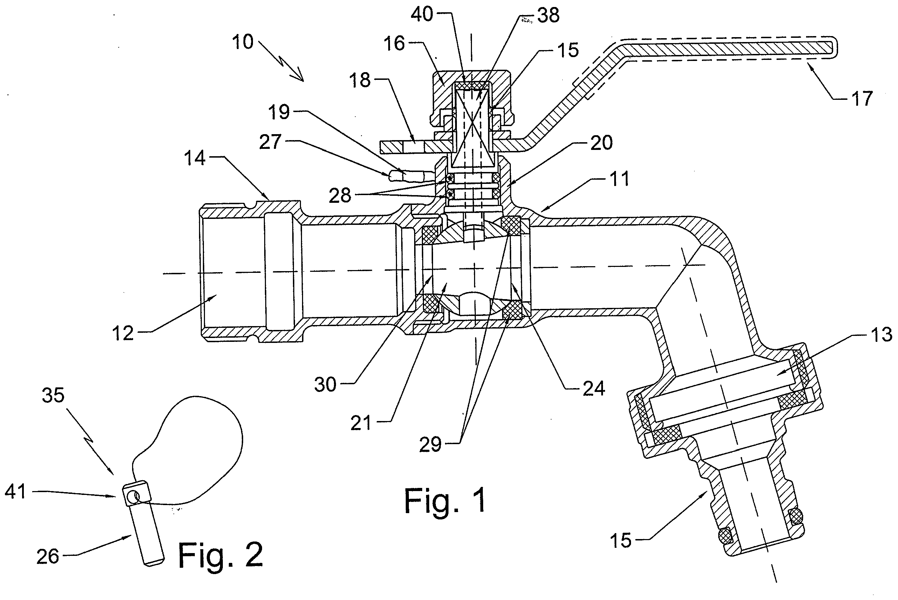

In one of the preferred embodiments of the invention, as can be seen in Figure 1, the valve (10) is coupled to a fitting (14) through which the liquid enters the body (11) of the valve (10), entering through the hole (12) and leaving through the outlet pipe (13), after passing through the flow control system, consisting among other things of a lever (17), attached to the body of the shaft (15), the latter (15) being mounted on the inside of the body (11) with the aid of o-rings (28), and the sphere (21) being attached to the end of the shaft (15) and the air being introduced into the channel (38) with the aid of the hole (39). The sphere (21) rotates inside the body (11) by turning the lever (17), the sphere (21) sliding thanks to the joints in the form of seating (29), which partially surround the surface (22) of the sphere (21).

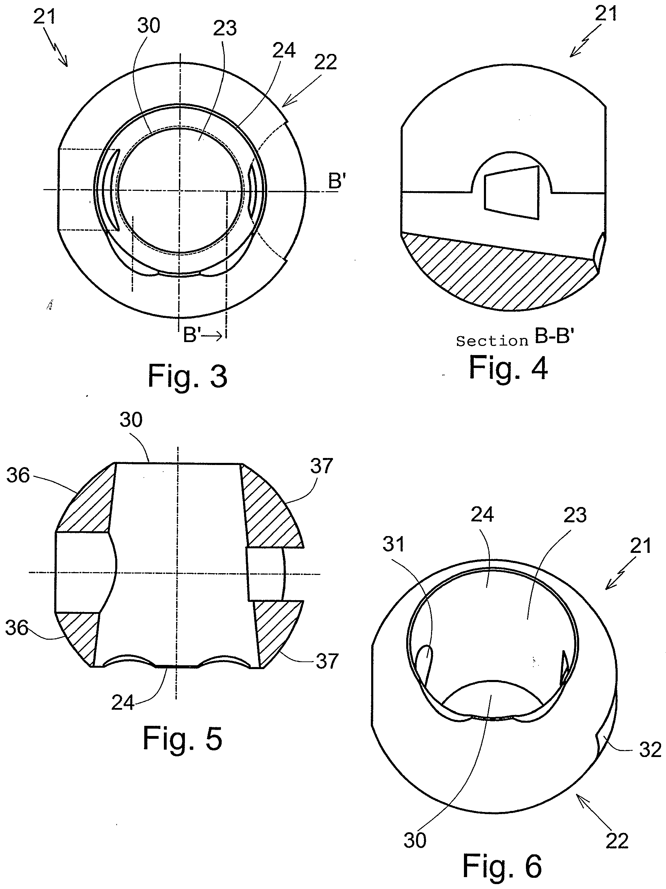

As an essential feature of the invention, as shown in Figures 3 to 6, the surface (22) of the sphere (21) has different openings dimensioned so that the diameter of the hole (30) for the inflow of liquid into the sphere (21) is smaller than the outlet hole (24), respectively, as shown in Figure 3, the shaft (15) entering through the hole (23) projected in the body of the sphere (21).

Although in the state of the art (21) it is known colloquially as a sphere, the configuration is not perfectly spherical, as can be seen in detail in Figure 5, so the surfaces (36-37) in contact with the Teflon seating (29) allow or otherwise the passage of liquid through the outlet (13) to the outside.

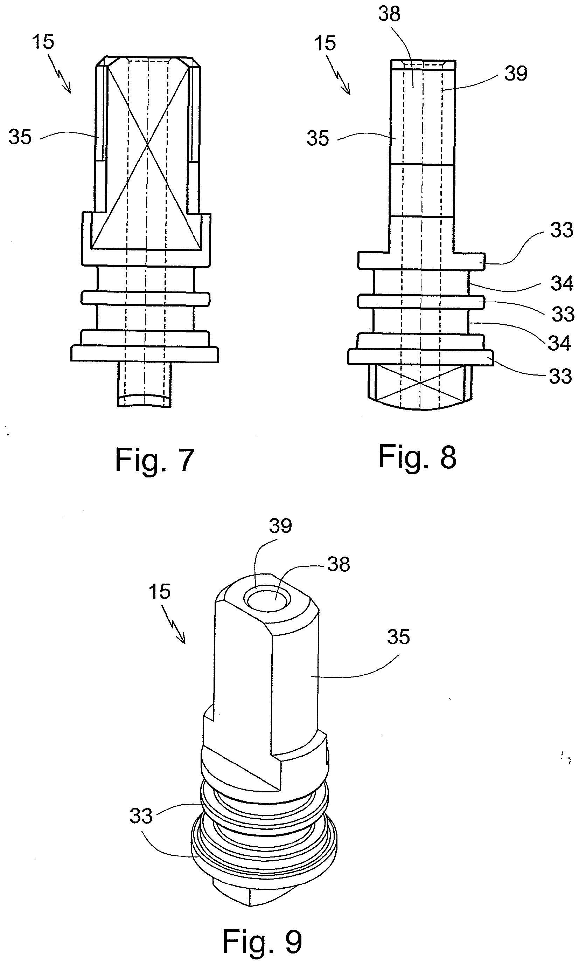

On the surface (22) of the sphere (21) respective holes are provided for the passage of air through the channel (38), defined by the hole (39) in the shaft (15), which, as shown in Figures 7 to 9, has a substantially cylindrical body with respective circular extensions (33), between which recesses (34) are formed, into which the o-rings (28) are fitted, and the shaft (15)-seal (28) assembly in the neck (20) of the valve (10). The upper part of the shaft (15), as shown in Figure 1, is attached to the hole of the lever (17), this upper part being covered with a protective cap (16), with a seal interleaved (40).

To facilitate the passage of air into the sphere (21), the cap (16) is removed from the top of the valve (10), as shown in Figure 1.

As another feature of the invention, the neck (20) of the valve (10) body (11) has a tab (27) provided with a hole (19), and the flow control lever (17) passing through the inside of the valve (10) from the inlet (12) with another hole (18), so that in a certain position of (17) the valve (10) it remains closed, this position being latched by a pin (35) comprising a head (41) shaft (26), as shown in Figure 2, so that the user can insert this pin (25) and the shaft (26) through the holes (18-19), blocking the movement of the lever (17). Alternatively, a conventional padlock can be passed through these holes (18-19), preventing unauthorized use of the liquid flowing through the valve (10).

The operation of the valve (10) is as follows; when the user turns the lever (17) from the closed position in which the lever (17) is perpendicular to the body (11), at which time the lever (17) is at an angle of 90° to the direction of flow of the liquid, the shaft (15) and the sphere (21) rotate, so that the surfaces (36-37) that initially, in this closed position, fully block the passage of the liquid from the inlet (12), coinciding perfectly with the seating (29), with this rotation the liquid inlet (30) and outlet (24) holes gradually start to emerge in relation to the seal in the form of seating (29), allowing the liquid to flow through the valve (10) outlet (13), there being an intermediate position in which a small turn of the lever (17) causes the zone (36) to block the passage of the liquid but with the zone (37) continuing to coincide partially with the seating (29), allowing the outflow of any liquid that may have remained inside the sphere (21), or, even if part of this liquid remains inside the sphere (21), when it freezes it can expand because it is not totally enclosed by the outlet (24), the outflow of water being assisted by the inflow of air through the channel (38) when the cap (16) is removed. The scope of the invention is defined by the appended claims.

## Claims

1. Shutoff valve (10) with anti-freeze system, the main elements of which, among others, include a body (11) of the valve (10), housing on the inside, with the aid of seals in the form of seating (29) a sphere (21), which rotates relative to the seating (29) with the aid of a shaft (15) inserted into the sphere (21), at the end of which, as a means of regulation, there is a lever (17), the rotation of which allows or prevents the passage of water, in addition to increasing or decreasing the flow, whereby the outer surface (22) of the sphere (21) has respective openings dimensioned so that the diameter of a hole (30) for the inflow of water into the sphere (21) is smaller than an outlet hole (24), respectively, the shaft (15) entering through a hole (23) projected in the body of the sphere (21), there being contact zones (36-37) on the outer surface of the sphere (21), with the seals in the form of seating (29) housed inside the body (11) of the valve (10), **characterised in that** the shaft (15) includes a hole (39) defining a channel (38) and the shutoff valve further includes a cap (16) that is configured to cover the upper part of the shaft (15), such that the inflow of air into the sphere (21) is ensured by removing the cap (16) and allowing the air to pass through the channel (38).

2. Shutoff valve (10) with anti-freeze system, according to the claim 1 **characterized in that** the valve (10) is coupled to a fitting (14) through which the liquid enters the body (11) of the valve (10), entering through a hole (12) and leaving through an outlet pipe (13), after passing through the flow control system, consisting among other things of a lever (17), attached to the body of the shaft (15), the latter (15) being mounted on the inside of the body (11) with the aid of o-rings (28), and the sphere (21) being attached to the end of the shaft (15).

3. Shutoff valve (10) with anti-freeze system, according to the preceding claims **characterized in that** the neck (20) of the valve body (11) has a tab (27) provided with a hole (19), and the flow control lever (17) with another hole (18), so that in a certain position of the flow control lever (17) the valve (10) remains closed, this position being latched by either a conventional padlock or a pin (35) comprising a head (41 and a shaft (26), so that the user can insert either the conventional padlock or said pin (35) and the shaft (26) through the holes (18-19), blocking the movement of the lever (17).

## Patentansprüche

1. Absperrventil (10) mit Frostschutzsystem, dessen Hauptelemente unter anderem einen Körper (11) des Ventils (10) umfassen, der im Inneren mit der Hilfe von Abdichtungen in der Form eines Sitzes (29) eine Kugel (21) aufnimmt, die sich relativ zu dem Sitz (29) dreht, mittels einer Welle (15), die in die Kugel (21) eingefügt ist, an deren Ende sich als Regelungseinrichtung ein Hebel (17) befindet, dessen Drehung den Durchlass von Wasser erlaubt oder verhindert, zusätzlich zum Erhöhen oder Verringern des Flusses, wobei die Außenoberfläche (22) der Kugel (21) jeweilige Öffnungen aufweist, die abgemessen sind, so dass der Durchmesser eines Lochs (30) für den Einfluss von Wasser in die Kugel (21) jeweils kleiner ist als ein Auslassloch (24), wobei die Welle (15) durch ein Loch (23) eindringt, das in den Körper der Kugel (21) vorsteht, wobei es an der Außenoberfläche der Kugel (21) Kontaktzonen (36-37) gibt, wobei die Abdichtungen in der Form des Sitzes (29) im Inneren des Körpers (11) des Ventils (10) aufgenommen sind, **dadurch gekennzeichnet, dass** die Welle (15) ein Loch (39) umfasst, das einen Kanal (38) definiert und das Absperrventil ferner eine Abdeckung (16) umfasst, die konfiguriert ist, um den oberen Teil der Welle (15) zu bedecken, so dass der Einfluss von Luft in die Kugel (21) sichergestellt wird durch Entfernen der Abdeckung (16) und Ermöglichen, dass Luft durch den Kanal (38) verläuft.

2. Absperrventil (10) mit Frostschutzsystem gemäß Anspruch 1, **dadurch gekennzeichnet, dass** das Ventil (10) mit einem Anschlusselement (14) gekoppelt ist, durch das die Flüssigkeit in den Körper (11) des Ventils (10) eindringt, die durch ein Loch (12) eindringt und durch ein Auslassrohr (13) austritt, nach einem Verlaufen durch das Flusssteuersystem, das unter anderem aus einem Hebel (17) besteht, der an dem Körper der Welle (15) befestigt ist, wobei die letztere (15) mit der Hilfe von O-Ringen (28) im Inneren des Körpers (11) befestigt ist, und die Kugel (21) an dem Ende der Welle (15) angebracht ist.

3. Absperrventil (10) mit Frostschutzsystem gemäß den vorhergehenden Ansprüchen, **dadurch gekennzeichnet, dass** der Hals (20) des Ventilkörpers (11) einen Vorsprung (27) aufweist, der mit einem Loch (19) versehen ist, und der Flusssteuerhebel (17) mit einem weiteren Loch (18), so dass in einer bestimmten Position des Flusssteuerhebels (17) das Ventil (10) geschlossen bleibt, wobei diese Position entweder durch ein herkömmliches Vorhängeschloss oder einen Stift (35) verriegelt ist, der einen Kopf (41) und eine Welle (26) aufweist, so dass der Nutzer entweder das herkömmliche Vorhängeschloss oder den Stift (35) und die Welle (26) durch die Löcher (18-19) einfügen kann, wodurch die Bewegung des Hebels (17) blockiert wird.

## Revendications

1. Vanne d'arrêt (10) avec système antigel, dont les éléments principaux de celle-ci, comprennent, entre autres, un corps (11) de la vanne (10), recevant à l'intérieur, à l'aide de joints de type à siège (29), une sphère (21) en rotation par rapport au siège (29) à l'aide d'un arbre (15) inséré dans la sphère (21), à l'extrémité duquel, comme moyen de régulation, se trouve un levier (17), la rotation duquel permet ou empêche le passage d'eau, en plus d'augmenter ou de baisser le débit, au moyen duquel la surface externe (22) de la sphère (21) comporte les ouvertures respectives dimensionnées afin que le diamètre d'un orifice (30) d'arrivée d'eau dans la sphère (21) soit respectivement plus petit qu'un orifice de sortie (24), , l'arbre (15) entrant par l'orifice (23) étant projeté dans le corps de la sphère (21), tandis que des zones de contact (36-37) existantes sur la surface externe de la sphère (21) avec les joints de type à siège (29) logés à l'intérieur du corps (11) de la vanne (10), **caractérisé en ce que** l'arbre (15) comprend un orifice (39) définissant un canal (38) et la vanne d'arrêt comprenant en outre un capuchon (16) configuré pour couvrir la partie supérieure de l'arbre (15), de telle sorte que le débit d'air entrant dans la sphère (21) est assuré par le retrait du capuchon (16) permettant à l'air de passer dans le canal (38).

2. Vanne d'arrêt (10) avec système antigel, selon la revendication 1, **caractérisée en ce que** la vanne (10) est couplée à un raccord (14) à travers lequel le liquide entre dans le corps (11) de la vanne (10), entrant dans un orifice (12) et sortant à travers un tuyau de sortie (13), après être passé à travers le système de contrôle de débit, constitué entre autres d'un levier (17), fixé au corps de l'arbre (15), ce dernier (15) étant monté à l'intérieur du corps (11) à l'aide de joints toriques (28) et la sphère (21) étant fixée à l'extrémité de l'arbre (15).

3. Vanne d'arrêt (10) avec système antigel, selon les revendications précédentes, **caractérisée en ce que** le goulot (20) du corps de la vanne (11) comporte une languette (27) munie d'un orifice (19) et le levier de contrôle de débit (17), d'un autre orifice (18), de telle sorte que dans une certaine position du levier de contrôle de débit (17), la vanne (10) reste fermée, cette position étant verrouillée soit par un cadenas conventionnel ou une goupille (35) comprenant une tête (41) et un axe (26), afin que l'utilisateur puisse insérer soit le cadenas conventionnel ou ladite goupille (35) et l'axe (26) dans les orifices (18-19), bloquant ainsi tout mouvement du levier (17).
